# EUROPEAN PATENT APPLICATION

(11) **EP 2 378 105 A1**
(43) Date of publication of application: **19.10.2011**
(21) Application number: 10731341.3
(22) Date of filing: 13.01.2010
(51) Int. Cl.: F02M 37/00, F02D 45/00

(54) **AMMONIA-BURNING INTERNAL COMBUSTION ENGINE**

(30) Priority: 13.01.2009 JP 2009005178
(71) Applicant: Toyota Jidosha Kabushiki Kaisha, Toyota-shi, Aichi 471-8571 (JP); Aisan Industry Co., Ltd., Obu-shi, Aichi 474-8588 (JP)
(72) Inventor: KOJIMA, Susumu, Toyota-shi Aichi 471-8571 (JP); SHIMIZU, Rio, Toyota-shi Aichi 471-8571 (JP); SUGIMOTO, Tomojiro, Toyota-shi Aichi 471-8571 (JP); MICHIKAWAUCHI, Ryo, Toyota-shi Aichi 471-8571 (JP); KIKUTA, Hikaru, Obu-shi Aichi 474-8588 (JP); ISHII, Kazunori, Obu-shi Aichi 474-8588 (JP); TSUJINO, Mutsumi, Obu-shi Aichi 474-8588 (JP); AOKI, Tsuneaki, Obu-shi Aichi 474-8588 (JP); TAKEDA, Keiso, Obu-shi Aichi 474-8588 (JP)
(74) Representative: TBK
(86) International application number: PCT/JP2010/050579
(87) International publication number: WO 2010/082672

(57) **Abstract**

Inside an engine compartment (53) of a vehicle, an ammonia concentration sensor (50) is arranged above a liquid ammonia injector (13) which is attached to an internal combustion engine body (1) and to the rear in a direction of progression of the vehicle. An ammonia concentration which is detected by the ammonia concentration sensor (50) is used as the basis to judge if ammonia is leaked.

## Description

### Technical Field

The present invention relates to an ammonia burning internal combustion engine.

### Background Art

In an internal combustion engine, in the past, the fuel used has mainly been fossil fuels. However, in this case, burning such fuels produces CO₂ which causes global warming. On the other hand, burning ammonia does not produce CO₂ at all. Thus, there is known an internal combustion engine designed so as to use ammonia as fuel and not produce CO₂ (for example, see Patent Literature 1).

### Citation List

### Patent Literature

Patent Literature 1 Japanese Patent Publication (A) No. 5-332152

### Summary of Invention

### Technical Problem

However, ammonia has a sharp odor. Therefore, when using ammonia as fuel, some sort of measure is necessary for dealing with leakage of the ammonia. However, in the above-mentioned internal combustion engine, leakage of the ammonia is not considered at all.

### Solution to Problem

Therefore, in the present invention, there is provided an ammonia burning internal combustion engine which uses ammonia as fuel, wherein an ammonia concentration sensor is arranged in a spatial region where it is presumed leaked ammonia will circulate when ammonia leaks from an ammonia injector for feeding the engine with ammonia or from an ammonia feed pipe for feeding the ammonia injector with ammonia and wherein an ammonia concentration which is detected by the ammonia concentration sensor is used as the basis to judge if ammonia leaks.

Further, in the present invention, there is provided an ammonia burning internal combustion engine which uses ammonia as fuel, wherein an ammonia injector for feeding the engine with ammonia is coupled through an ammonia feed pipe to a fuel tank and wherein the engine is provided with an ammonia trap tank for preventing ammonia from leaking into an outside air by receiving and storing pressurized liquid ammonia from an inside of the ammonia feed pipe or pressurized liquid ammonia from an inside of the fuel tank.

Further, in the present invention, there is provided an ammonia burning internal combustion engine which uses ammonia as fuel, wherein the engine is provided with a fuel tank for feeding ammonia to the engine, the fuel tank is coupled, through a pressure relief valve which opens when a pressure inside of the fuel tank becomes higher than a predetermined pressure, to an inside of an engine exhaust passage upstream of an ammonia purification catalyst, and, when the pressure relief valve opens, part of a liquid ammonia inside of the fuel tank is discharged into the engine exhaust passage and is removed by the ammonia purification catalyst.

### Advantageous Effects of Invention

In the first aspect of the invention, it is possible to judge if ammonia is leaked, while in the second and third aspects of the invention, it is possible to keep ammonia from leaking into the atmosphere.

### Brief Description of the Drawings

FIG. 1 is an overview of an internal combustion engine.
FIG. 2 is a side view of a part of a vehicle shown schematically.
FIG. 3 is a view showing a relationship between a reference concentration of ammonia and a vehicle speed.
FIG. 4 is a flowchart for detection of leakage of ammonia.
FIG. 5 is an overall view showing another embodiment of an internal combustion engine.
FIG. 6 is a time chart showing an opening/closing operation of a shutoff valve etc.
FIG. 7 is an overall view showing still another embodiment of an internal combustion engine.
FIG. 8 is a view showing a modification of the internal combustion engine shown in FIG. 6.
FIG. 9 is a view showing a modification of the internal combustion engine shown in FIG. 7.
FIG. 10 is an overview showing still another embodiment of an internal combustion engine.

### Description of Embodiments

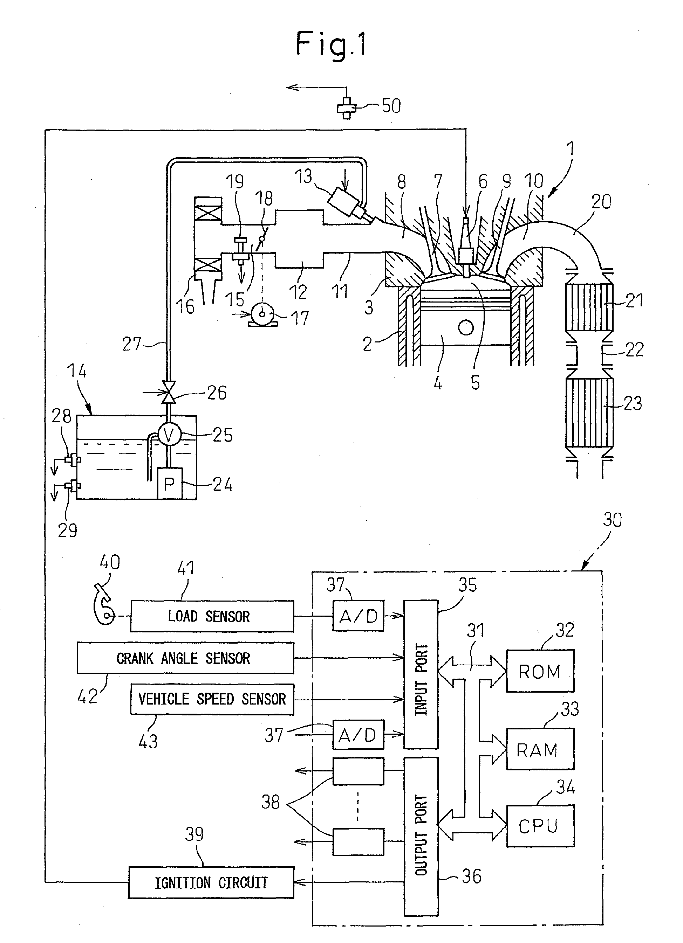

Referring to FIG. 1, 1 indicates an internal combustion engine body, 2 a cylinder block, 3 a cylinder head, 4 a piston, 5 a combustion chamber, 6 a plasma jet ignition plug which is arranged at the center of the top surface of the combustion chamber 5 and emits a plasma jet, 7 an intake valve, 8 an intake port, 9 an exhaust valve, and 10 an exhaust port. The intake port 8 is connected through an intake branch pipe 11 to a surge tank 12. In each intake branch pipe 11, a liquid ammonia injector 13 for injecting liquid ammonia toward the interior of each corresponding intake port 8 is arranged. This liquid ammonia injector 13 is fed with liquid ammonia from a fuel tank 14.

The surge tank 12 is connected through an intake duct 15 to an air cleaner 16. In the intake duct 15, a throttle valve 18 driven by an actuator 17 and an intake air amount detector 19 using for example a hot wire are arranged. On the other hand, the exhaust port 10 is connected through an exhaust manifold 20 to an ammonia adsorbent 21. The ammonia adsorbent 21 is connected through an exhaust pipe 22 to an ammonia purification catalyst 23 which can remove the ammonia included in the exhaust gas.

The fuel tank 14 is filled inside it with high pressure liquid ammonia of 0.8 MPa to 1.0 MPa or so. Inside of this fuel tank 14, a fuel feed pump 24 is arranged. A discharge port of this fuel feed pump 24 is connected to the liquid ammonia injector 13 through a relief valve 25 which returns the liquid ammonia to the inside of the fuel tank 14 when the discharge pressure becomes a certain pressure or more, a shutoff valve 26 which opens when the engine is operating and which is closed when the engine is stopped, and a liquid ammonia feed pipe 27.

When the pressure inside the fuel tank 14 is a high pressure of 0.8 MPa to 1.0 MPa or so, the operation of the fuel feed pump 24 is made to stop. At this time, the liquid ammonia in the fuel tank 14 is fed to the liquid ammonia injector 13 by the pressure inside the fuel tank 14. On the other hand, for example, when the outside air temperature becomes low and the pressure inside the fuel tank 14 falls, the fuel feed pump 24 is used to feed liquid ammonia to the liquid ammonia injector 13. Note that, the fuel tank 14 is provided with a pressure sensor 28 for detecting the pressure inside the fuel tank 14 and a temperature sensor 29 for detecting the temperature of the liquid ammonia inside the fuel tank 14.

An electronic control unit 30 is formed by a digital computer and is provided with a ROM (read only memory) 32, a RAM (random access memory) 33, a CPU (microprocessor) 34, an input port 35, and an output port 36, which are connected to each other by a bi-directional bus 31. An output signal of the intake air amount detector 19, an output signal of the pressure sensor 28, and an output signal of the temperature sensor 29 are input to the input port 35 through corresponding AD converters 37. Further, an accelerator pedal 40 is connected to a load sensor 41 generating an output voltage proportional to the amount of depression of the accelerator pedal 40. The output voltage of the load sensor 41 is input through a corresponding AD converter 37 to the input port 35. Further, the input port 35 is connected to a crank angle sensor 42 generating an output pulse each time a crankshaft rotates by for example 30°. Further, a vehicle speed sensor 43 generates an output signal which expresses the vehicle speed. This output signal is input to the input port 35. On the other hand, the output port 36 is connected to an ignition circuit 39 of the ignition device 6. Furthermore, the output port 36 is connected through a corresponding drive circuit 38 to the liquid ammonia injector 13, the drive actuator 17 of the throttle valve, fuel feed pump 24, and shut-off valve 26.

Now then, at the time of engine operation, liquid ammonia is injected from the liquid ammonia feed valve 13 to the inside of the intake port 8 at each cylinder. At this time, the liquid ammonia which is injected from the liquid ammonia injector 13 is vaporized by boiling under reduced pressure just when being injected. In this regard, the latent heat of vaporization of the liquid ammonia is a latent heat of vaporization of about four times that of for example gasoline, that is, is extremely large. Therefore, if the liquid ammonia vaporizes, the temperature of the intake air which is fed into the combustion chamber 5 drops considerably. As a result, the density of the intake air which is fed into the combustion chamber 5 becomes higher and the volume efficiency is raised, so the engine output is improved. Note that, when trying to inject liquid ammonia in this way, there is also the advantage that it is not necessary to provide the vaporizer which is required when trying to inject gaseous ammonia.

The ammonia which is vaporized inside the intake port 8 is fed inside of the combustion chamber 5 in the form of gaseous ammonia. The gaseous ammonia which is fed inside of the combustion chamber 5 is ignited in the second half of the compression stroke by the plasma jet 55 which is ejected from the plasma jet ignition plug 6. If the gaseous ammonia is completely burned, theoretically it becomes N₂ and H₂O, that is, no CO₂ is produced at all. However, in actuality, unburned ammonia remains and therefore unburned ammonia is exhausted from the combustion chamber 5. Therefore, inside the engine exhaust passage, the ammonia purification catalyst 23 which can remove the unburned ammonia contained in the exhaust gas is arranged.

However, at the time of engine startup etc. when the temperature of the ammonia purification catalyst 23 is low, so the ammonia purification catalyst 23 is not activated, it is not possible to remove the unburned ammonia which is exhausted from the engine. Therefore, in an embodiment of the present invention, the ammonia adsorbent 21 which can adsorb the ammonia which is contained in exhaust gas and, when the temperature rises, releases the adsorbed ammonia is arranged in the engine exhaust passage upstream of the ammonia purification catalyst 23.

Therefore, in an embodiment of the present invention, at the time of engine startup etc. when the ammonia purification catalyst 23 is not activated, the unburned ammonia which is exhausted from the engine is adsorbed at the NOₓ adsorbent 21. Next, when the temperature of the NOₓ adsorbent 21 and ammonia purification catalyst 23 rises, the adsorbed ammonia is released from the NOₓ adsorbent 21. Around when the temperature of the NOₓ adsorbent 21 rises to the temperature for starting release of adsorbed NOₓ, the ammonia purification catalyst 23 is already activated, therefore, the ammonia which is released from the NOₓ adsorbent 21 is removed by the ammonia purification catalyst 23. If arranging the NOₓ adsorbent 21 upstream of the ammonia purification catalyst 23 in this way, it is possible to remove the unburned ammonia which is exhausted from the engine in the interval from when the engine is started to when the engine is stopped.

This ammonia purification catalyst 23 is comprised of one or both of an oxidation catalyst which can oxidize the ammonia and an NOₓ selective reduction catalyst which can selectively reduce the NOₓ which is contained in the exhaust gas in the presence of ammonia. When the ammonia purification catalyst 23 is comprised of an oxidation catalyst, the unburned ammonia which is exhausted from the engine is oxidized at the oxidation catalyst and therefore unburned ammonia is kept from being exhausted to the atmosphere.

On the other hand, even when ammonia is made to burn, NOₓ is produced. Therefore, the exhaust gas which is exhausted from the engine contains NOₓ. Further, the exhaust gas contains unburned ammonia, so if using the NOₓ selective reduction catalyst as the ammonia purification catalyst 23, the NOₓ in the exhaust gas is reduced by the unburned ammonia in the exhaust gas at the NOₓ selective reduction catalyst. At this time, the unburned ammonia is oxidized. That is, if using an NOₓ selective reduction catalyst, both the NOₓ and unburned ammonia in the exhaust gas can be removed. Therefore, the NOₓ selective reduction catalyst can be said to be extremely suitable as the exhaust purification catalyst of an ammonia burning internal combustion engine.

In this regard, ammonia has a sharp odor. Therefore, when using ammonia as fuel, some sort of measure becomes necessary to deal with leakage of ammonia. In this case, in the embodiment shown in FIG. 1, there is a good chance of leakage of ammonia at the liquid ammonia injector 13, liquid ammonia feed pipe 27, and, in particular, the joined parts of these liquid ammonia injector 13 and liquid ammonia feed pipe 27.

Therefore, in the embodiment shown in FIG. 1, an ammonia concentration sensor 50 is arranged in a spatial region where it is presumed that leaking ammonia will circulate when ammonia leaks from the liquid ammonia injector 13 or liquid ammonia feed pipe 27. The ammonia concentration which is detected by the ammonia concentration sensor 50 is used as the basis to judge if ammonia leaks. Note that, ammonia is lighter than air, therefore the leaked ammonia diffuses upward. Therefore, in the embodiment shown in FIG. 1, the ammonia concentration sensor 50 is arranged above the liquid ammonia injector 13.

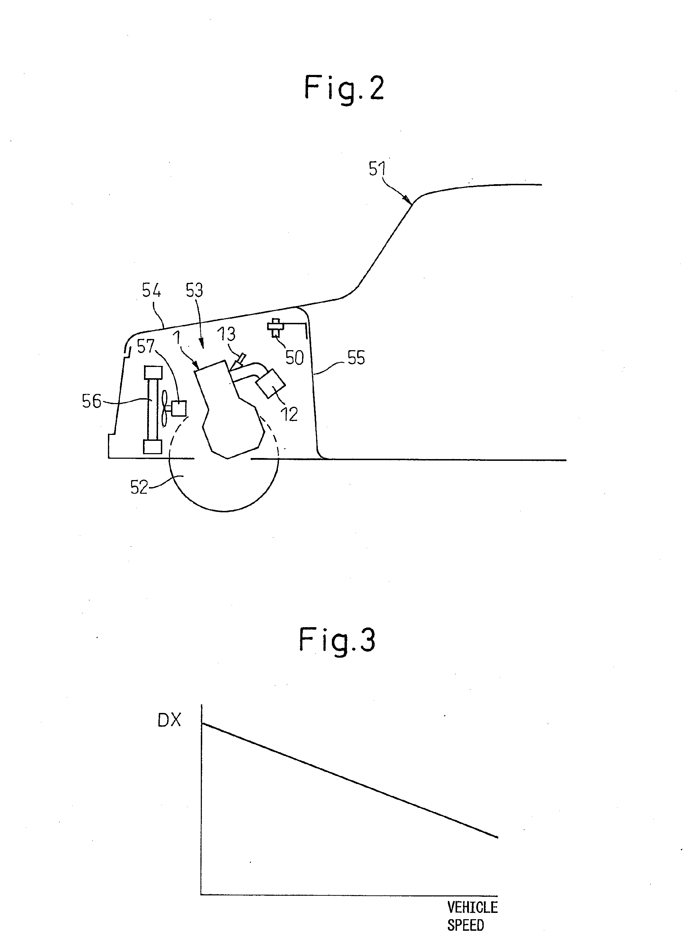

FIG. 2 shows a specific example of the arrangement of the ammonia concentration sensor 50. Note that, in FIG. 2, 51 indicates a vehicle body, 52 the front wheels, 53 an engine compartment holding the internal combustion engine body 1, 54 a hood which covers the top of the engine compartment 53, 55 a partition wall between the engine compartment 53 and the passenger compartment, 56 a radiator, and 57 a radiator fan drive motor.

In FIG. 2, ammonia which leaked from the liquid ammonia injector 13 or the liquid ammonia feed pipe 27 diffuses upward and toward the rear in the direction of progression of the vehicle. Therefore, in the embodiment shown in FIG. 2, the ammonia concentration sensor 50 is arranged inside a spatial region where it is presumed the leaked ammonia will circulate inside the engine compartment 53, that is, above and in the rear of the liquid ammonia injector 13.

Now then, in an embodiment of the present invention, it is judged that ammonia leaks when the ammonia concentration which is detected by the ammonia concentration sensor 50 becomes higher than a predetermined reference concentration. However, in this case, if the flow rate of the air in the spatial region where it is presumed the leaked ammonia will circulate, for example, inside the engine compartment 53, becomes faster, the leaked ammonia will be diluted by the circulating air. In this case, even if the amount of leakage of the ammonia is the same, the ammonia concentration will fall the faster the flow rate of the circulating air.

Therefore, in an embodiment of the present invention, the reference concentration of the ammonia when judging that ammonia leaks is lowered the faster the flow rate of the air which flows through the inside of the above spatial region. For example, this reference concentration DX, as shown in FIG. 3, is lowered the faster the vehicle speed. Further, this reference concentration DX may also be lowered when the flow rate of air inside the engine compartment 53 is speeded up by a radiator fan, for example, when the radiator fan drive motor 57 is driven.

Further, as shown in FIG. 1, the liquid ammonia feed pipe 27 is coupled, through the shutoff valve 26 which is opened at the time of engine operation, to the fuel discharge port of the fuel tank 14. Leakage of the ammonia usually occurs during engine operation where the shutoff valve 26 is open. Therefore, in an embodiment of the present invention, to reduce the power consumption required for detecting leakage of the ammonia, the ammonia concentration sensor 50 judges for leakage of the ammonia when the shutoff valve 26 is opened and stops this when the shutoff valve 26 is closed.

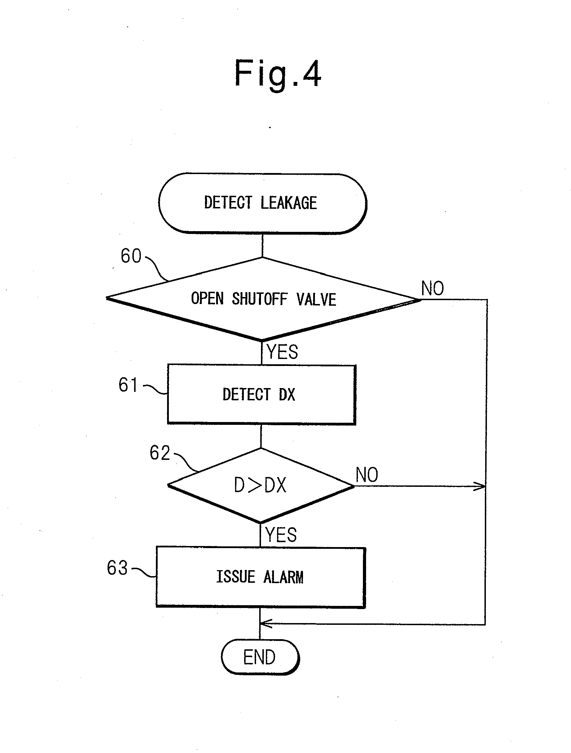

FIG. 4 shows an ammonia leakage detection routine.

Referring to FIG. 4, first, at step 60, it is judged if the shutoff valve 26 is opened. When the shutoff valve 26 is opened, the routine proceeds to step 61 where the relationship shown in FIG. 3 is used to calculate a reference concentration DX. Next, at step 62, it is judged if the ammonia concentration D which is detected by the ammonia concentration sensor 50 becomes higher than the reference concentration DX. When D>DX, the routine proceeds to step 63 where an alarm is issued to indicate that the ammonia is leaking.

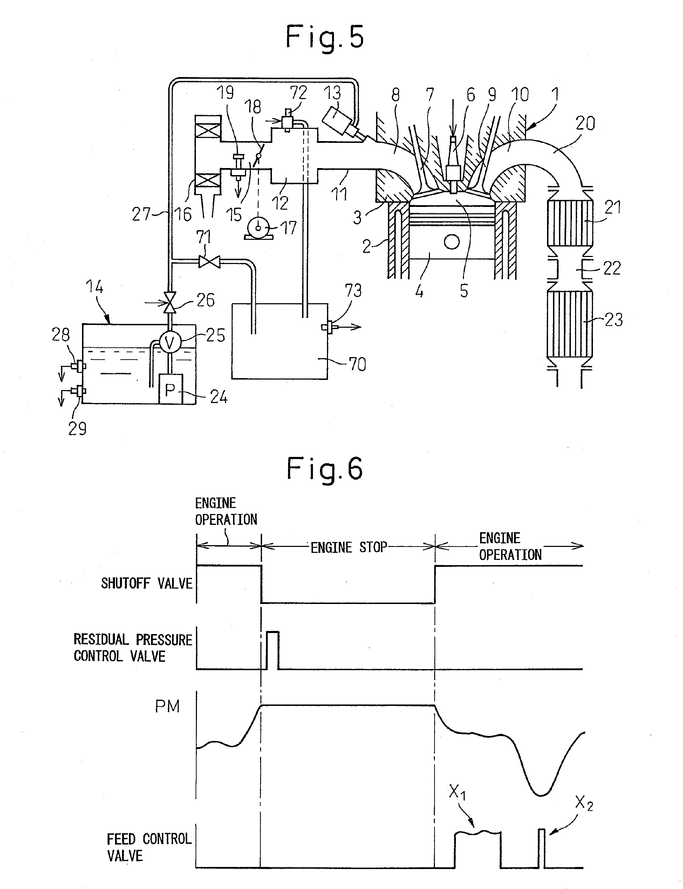

FIG. 5 shows another embodiment. In this embodiment, to keep ammonia from leaking inside the outside air, an ammonia trap tank 70 is provided for receiving and storing the pressurized liquid ammonia inside of the liquid ammonia feed pipe 27. This ammonia trap tank 70 on the one hand is coupled through a residual pressure control valve 71 to the liquid ammonia feed pipe 27 and on the other hand is coupled through a feed control valve 72 to the inside of the intake passage, for example, the inside of the surge tank 12. Inside of the ammonia trap tank 70, a pressure sensor 73 is arranged for detecting the pressure inside of the ammonia trap tank 70.

FIG. 6 shows the opening degrees of the shutoff valve 26, residual pressure control valve 71, and feed control valve 72 and the changes in the pressure PM inside of the intake passage downstream of the throttle valve 18. As shown in FIG. 6, the shutoff valve 26 opens at the time of engine operation and is closed when the engine stops. Further, the residual pressure control valve 71 is closed at the time of engine operation.

In this regard, if the engine is stopped and the shutoff valve 26 is closed, high pressure liquid ammonia remains inside of the liquid ammonia feed pipe 27. However, in this way, if liquid ammonia remains inside the liquid ammonia feed pipe 27 in a high pressure state, there is the danger of the liquid ammonia which remains inside the liquid ammonia feed pipe 27 leaking from, for example, the nozzle opening of the liquid ammonia injector 13. Therefore, in the embodiment shown in FIG. 5, as shown in FIG. 6, the residual pressure control valve 71 is temporarily opened when the engine operation is stopped and the shutoff valve 26 is closed.

If the residual pressure control valve 71 is temporarily opened, the liquid ammonia which remains inside the liquid ammonia feed pipe 27 is discharged into the ammonia trap tank 70 and, as a result, the inside of the liquid ammonia feed pipe 27 is reduced in pressure. Therefore, it is possible to keep the liquid ammonia inside of the liquid ammonia feed pipe 27 from leaking to the outside air when the engine is stopped.

Note that, in this case, to completely prevent the liquid ammonia from leaking out into the outside air, the pressure inside of the liquid ammonia feed pipe 27 is preferably reduced to substantially atmospheric pressure. Therefore, in the embodiment shown in FIG. 5, the volume of the ammonia trap tank 70 is made a volume whereby the pressure inside of the liquid ammonia feed pipe 27 becomes substantially atmospheric pressure when the residual pressure control valve 71 is opened. Note that, if the inside of the liquid ammonia feed pipe 27 is reduced in pressure, the liquid ammonia is gasified. In this case, to store ammonia in the form of gaseous ammonia of substantially atmospheric pressure, as the volume of the ammonia trap tank 70, a volume of about 1000 times the volume of the inside of the liquid ammonia feed pipe 27 becomes necessary.

On the other hand, the gaseous ammonia which is stored in the ammonia trap tank 70 is preferably burned in the combustion chamber 5. Therefore, in the embodiment shown in FIG. 5, as shown in FIG. 6 by X₁, at the time of engine operation, the feed control valve 72 is opened, whereby the gaseous ammonia inside of the ammonia trap tank 70 is fed through the feed control valve 72 to the engine, for example, to the inside of the surge tank 12, at the time of engine operation. Note that, in this case, the pressure inside of the ammonia trap tank 70 which is detected by the pressure sensor 73 and the pressure inside of the surge tank 12 are used to calculate the feed rate of ammonia from the feed control valve 72. The feed rate of ammonia from the liquid ammonia injector 13 is reduced by exactly this feed rate of ammonia.

Further, if raising the degree of pressure reduction when the inside of the liquid ammonia feed pipe 27 is reduced in pressure when the engine is stopped, it is possible to further prevent leakage of the ammonia. Therefore, in the embodiment shown in FIG. 5, to raise the degree of pressure reduction, as shown by X₂ in FIG. 6, the feed control valve 72 is temporarily opened when the pressure PM inside of the intake passage downstream of the throttle valve 18 greatly falls, whereby a large vacuum pressure is generated inside of the ammonia trap tank 70. That is, in this embodiment, the inside of the ammonia trap tank 70 is temporarily coupled with the inside of the intake passage downstream of the throttle valve 18 at the time of engine operation whereby the pressure inside the ammonia trap tank 70 is made the vacuum pressure which is generated inside of the intake passage downstream of the throttle valve 18.

Note that, instead of making the feed control valve 72 temporarily open when the pressure inside of the intake passage downstream of the throttle valve 18 becomes larger in this way, it is also possible to couple the intake passage downstream of the throttle valve 18, for example, the inside of the surge tank 12, and the inside of the ammonia trap tank 70 through a check valve which allows flow only from the inside of the ammonia trap tank 70 toward the inside of the surge tank 12.

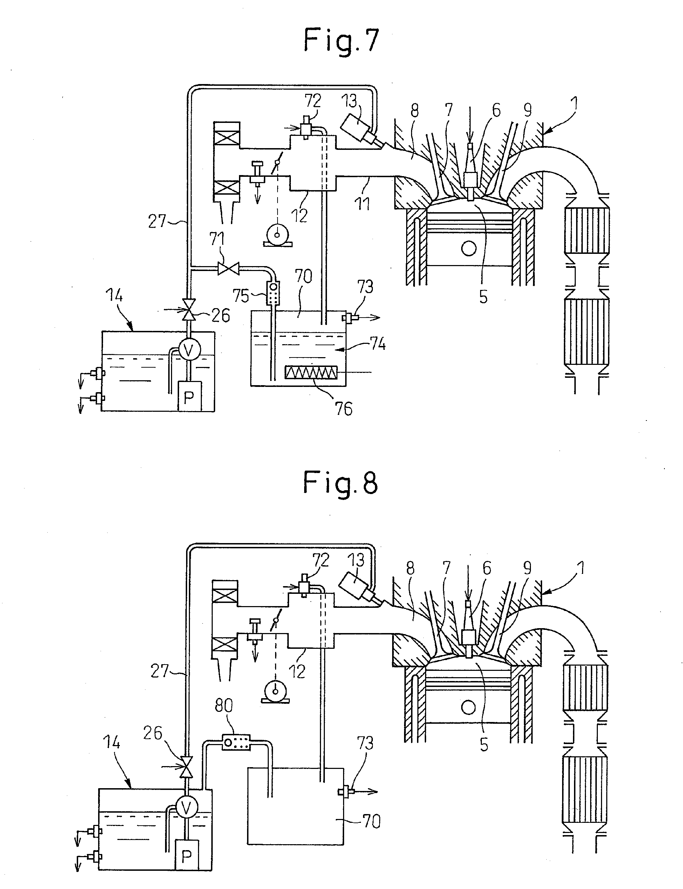

FIG. 7 shows still another embodiment. In this embodiment, water 74 is stored in the ammonia trap tank 70 for dissolving the ammonia. That is, ammonia has a large solubility in water. Therefore, if storing water 74 inside the ammonia trap tank 70, when reducing the pressure inside of the liquid ammonia feed pipe 27, it is possible to easily reduce the pressure inside of the liquid ammonia feed pipe 27 to about the atmospheric pressure. Further, 100 g of water dissolves about 30 g of ammonia, so if a volume of water 74 of about three times the volume of the inside of the liquid ammonia feed pipe 27 is stored, it is possible to reduce the pressure inside of the liquid ammonia feed pipe 27 down to substantially atmospheric pressure. Therefore, in this case, there is the advantage that the ammonia trap tank 70 can be reduced in size.

Further, in the embodiment shown in FIG. 7, to prevent the water 74 from flowing into the liquid ammonia feed pipe 27, a check valve 75 which enables flow only from the inside of the liquid ammonia feed pipe 27 toward the inside of the ammonia trap tank 70 is arranged in series with the residual pressure control valve 71. On the other hand, the ammonia which is dissolved in the water 74 is also preferably made to burn in the combustion chamber 5. Therefore, in the embodiment shown in FIG. 7, to get the ammonia which is dissolved in the water 74 inside of the ammonia trap tank 70 released from the water 74, inside of the ammonia trap tank 70, for example, a heating device 76 which is comprised of an electric heater is arranged.

FIG. 8 shows a modification of FIG. 6. In this modification, the fuel tank 14 is coupled, through a pressure relief valve 80 which opens when the pressure inside of the fuel tank 14 becomes higher than a predetermined pressure, for example, through a safety valve which opens when the pressure inside of the fuel tank 14 becomes abnormally high due to some cause, to the ammonia trap tank 70. In this embodiment, if the pressure relief valve 77 opens, part of the liquid ammonia in the fuel tank 14 is discharged into the ammonia trap tank 70 and therefore ammonia is kept from leaking to the outside air.

In this embodiment as well, like in the embodiment shown in FIG. 6, the gaseous ammonia inside of the ammonia trap tank 70 is fed from the feed control valve 72 to the inside of the surge tank 12. Note that, if the pressure relief valve 80 opens, the pressure inside of the ammonia trap tank 70 rises and, therefore, it is possible to use the change in pressure inside of the ammonia trap tank 70 to judge if the pressure relief valve 80 opens. Therefore, in this modification, an output signal of the pressure sensor 73 which is arranged inside of the ammonia trap tank 70 is used as the basis to detect if the pressure relief valve 80 opens.

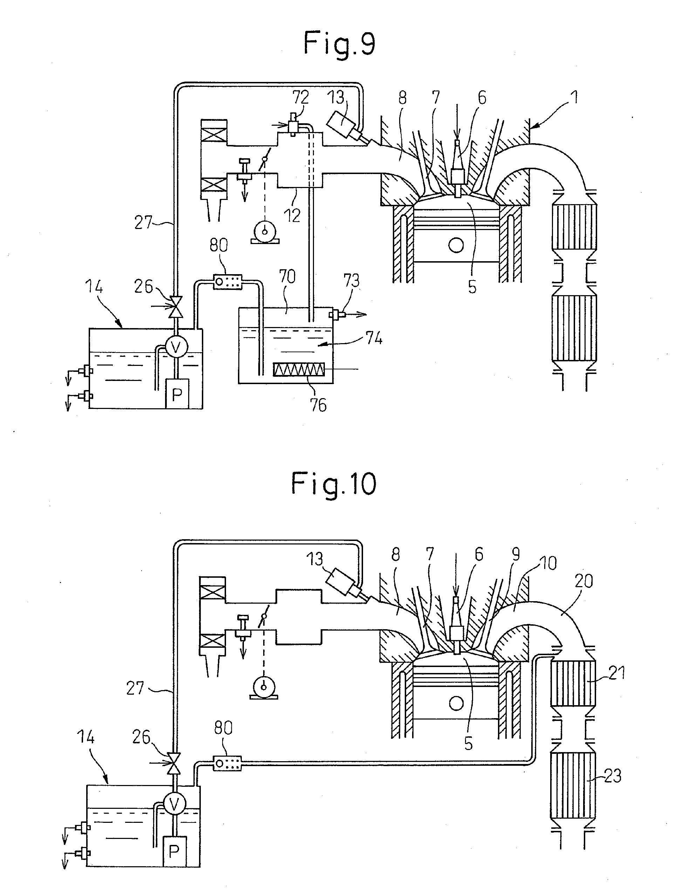

FIG. 9 shows a modification of FIG. 7. In this modification as well, like with the modification shown in FIG. 8, the fuel tank 14 is coupled, through a pressure relief valve 80 which opens when the pressure inside of the fuel tank 14 becomes higher than a predetermined pressure, to an ammonia trap tank 70. When the pressure relief valve 80 opens, part of the liquid ammonia in the fuel tank 14 is discharged into the ammonia trap tank 70 where it is dissolved in the water 74.

In this modification as well, like in the embodiment shown in FIG. 7, the ammonia which is dissolved in the water 74 is discharged from the water 74 by the heating device 78, while the discharged ammonia is fed from the feed control valve 72 to the inside of the surge tank 12. Further, in this modification, it is possible to use the change in color of the water when adding a litmus reagent or other reagent into the water 74 so as to judge if the pressure relief valve 80 opens or not.

FIG. 10 shows still another embodiment. In this embodiment, the fuel tank 14 is coupled, through a pressure relief valve 80 which opens when the pressure inside of the fuel tank 14 becomes higher than a predetermined pressure, to the inside of the engine exhaust passage upstream of the ammonia purification catalyst 23, in the example shown in FIG. 10, to the inside of the engine exhaust passage upstream of the ammonia adsorbent 21. When the pressure relief valve 80 opens, part of the liquid ammonia in the fuel tank 14 is discharged into the engine exhaust passage and is removed by the ammonia purification catalyst 23. Therefore, in this embodiment as well, it is possible to keep ammonia from leaking into the atmosphere.

### Reference Signs List

- 5: combustion chamber
- 7: intake valve
- 8: intake port
- 13: liquid ammonia injector
- 14: fuel tank
- 21: ammonia adsorbent
- 23: ammonia purification catalyst
- 26: shutoff valve
- 27: liquid ammonia feed pipe
- 50: ammonia concentration sensor
- 70: ammonia trap tank

## Claims

1. An ammonia burning internal combustion engine which uses ammonia as fuel, wherein an ammonia concentration sensor is arranged in a spatial region where it is presumed leaked ammonia will circulate when ammonia leaks from an ammonia injector for feeding the engine with ammonia or from an ammonia feed pipe for feeding the ammonia injector with ammonia and wherein an ammonia concentration which is detected by the ammonia concentration sensor is used as the basis to judge if ammonia leaks.

2. An ammonia burning internal combustion engine as claimed in claim 1, wherein said ammonia concentration sensor is arranged inside an engine compartment of a vehicle, in which the engine is arranged, above and in a rear of the ammonia injector which is attached to the engine.

3. An ammonia burning internal combustion engine as claimed in claim 1, wherein said ammonia feed pipe is coupled, through a shutoff valve which is opened at the time of engine operation, to a fuel discharge port of a fuel tank, and said ammonia concentration sensor judges leakage of the ammonia when the shutoff valve is opened and stops judgment when the shutoff valve is closed.

4. An ammonia burning internal combustion engine as claimed in claim 1, wherein it is judged that ammonia leaks when the ammonia concentration which is detected by said ammonia concentration sensor becomes higher than a predetermined reference concentration and wherein said reference concentration is lowered when a flow rate of air which flows through an inside of said spatial region becomes faster.

5. An ammonia burning internal combustion engine which uses ammonia as fuel, wherein an ammonia injector for feeding the engine with ammonia is coupled through an ammonia feed pipe to a fuel tank and wherein the engine is provided with an ammonia trap tank for preventing ammonia from leaking into an outside air by receiving and storing pressurized liquid ammonia from an inside of the ammonia feed pipe or pressurized liquid ammonia from an inside of the fuel tank.

6. An ammonia burning internal combustion engine as claimed in claim 5, wherein said ammonia feed pipe is on one hand coupled, through a shutoff valve which is opened at the time of engine operation, to the fuel tank and is on other hand coupled, through a residual pressure control valve which is closed at the time of engine operation, to said ammonia trap tank, said residual pressure control valve is temporarily opened when the engine stops operating and said shutoff valve is closed, and thereby liquid ammonia which remains inside the ammonia feed pipe is discharged to the inside of the ammonia trap tank and the inside of the ammonia feed pipe is reduced in pressure.

7. An ammonia burning internal combustion engine as claimed in claim 6, wherein a volume of said ammonia trap tank is made a volume whereby a pressure inside the ammonia feed pipe becomes substantially atmosphere pressure when said residual pressure control valve is opened.

8. An ammonia burning internal combustion engine as claimed in claim 5, wherein said fuel tank is coupled, through a pressure relief valve which opens when a pressure inside of the fuel tank becomes higher than a predetermined pressure, to said ammonia trap tank and wherein when said pressure relief valve opens, part of the liquid ammonia in the fuel tank is discharged inside of the ammonia trap tank.

9. An ammonia burning internal combustion engine as claimed in claim 8, wherein a pressure sensor is arranged inside of the ammonia trap tank and an output signal of said pressure sensor is used as the basis to detect if said pressure relief valve is opened.

10. An ammonia burning internal combustion engine as claimed in claim 5, wherein gaseous ammonia which is stored in said ammonia trap tank is fed to the engine through the feed control valve at the time of engine operation so as to burn it inside of a combustion chamber.

11. An ammonia burning internal combustion engine as claimed in claim 10, wherein said ammonia trap tank stores water for dissolving ammonia.

12. An ammonia burning internal combustion engine as claimed in claim 11, wherein a heating device is arranged inside of the ammonia trap tank for getting ammonia which is dissolved in the water in the ammonia trap tank to be released from the water.

13. An ammonia burning internal combustion engine as claimed in claim 5, wherein the inside of said ammonia trap tank is temporarily coupled with an inside of an intake passage downstream of a throttle valve at the time of engine operation whereby pressure inside the ammonia trap tank is made the vacuum pressure which is generated inside the intake passage downstream of the throttle valve.

14. An ammonia burning internal combustion engine which uses ammonia as fuel, wherein the engine is provided with a fuel tank for feeding ammonia to the engine, the fuel tank is coupled, through a pressure relief valve which opens when a pressure inside of the fuel tank becomes higher than a predetermined pressure, to an inside of an engine exhaust passage upstream of an ammonia purification catalyst, and, when the pressure relief valve opens, part of a liquid ammonia inside of the fuel tank is discharged into the engine exhaust passage and is removed by the ammonia purification catalyst.
